# EUROPEAN PATENT APPLICATION

(11) **EP 4 296 641 A1**
(43) Date of publication of application: **27.12.2023**
(21) Application number: 22179879.6
(22) Date of filing: 20.06.2022
(51) Int. Cl.: G01K 7/42, G06F 1/20, G06F 30/27

(54) **SYSTEM AND METHOD TO ADAPTIVE CONTROL SWITCHING FREQUENCY TO EXTEND IGBT LIFETIME**

(71) Applicant: ABB SCHWEIZ AG, 5400 Baden (CH)
(72) Inventor: KLOEPPER, Benjamin, 68199 Mannheim (DE); ALKKIOMAKI, Olli, 00220 Helsinki (FI); KOTRIWALA, Arzam Muzaffar, 68526 Ladenburg (DE); BORRISON, Reuben, 68723 Schwetzingen (DE); MALAKUTI, Somayeh, 69221 Dossenheim (DE)
(74) Representative: Maiwald GmbH

(57) **Abstract**

A computer-implemented method (100) for operating an insulated-gate bipolar transistor, IGBT, comprising the steps of:
• determining (110), by at least one machine learning model, based at least in part on the current operating state (1), and/or on current operating parameters (2), of the IGBT, a prediction of a change of the IGBT temperature (3) over a given temporal prediction horizon;
• determining (120), based on this prediction (3) on the one hand and the current operating state (1), and/or on the current operating parameters (2), on the other hand, a modification (4) of the operating parameters of the IGBT, and/or of a cooling system that acts on the IGBT, that is likely to reduce the absolute value of the predicted change of the IGBT temperature; and
• applying (130) this modification (4) to the operation of the IGBT, and/or for the cooling system.

## Description

### FIELD OF THE INVENTION

The invention relates to a method for operating an insulated-gate bipolar transistor, IGBT, based at least in part on the operating state of an insulated-gate bipolar transistor, IGBT, and operating state parameters of IGBT, a method to train at least one machine learning model, a computer program, a non-transitory machine-readable storage medium and/or a download product, one or more computers and/or compute instances.

### BACKGROUND

IGBTs are used as electronic switches, which have a wide spectrum of applications.

IGBTs are sensitive to changes in temperature, and their lifetime is reduced when experiencing significant temperature changes. The switching frequency, fan speed, and cooling liquid supply are important controllable variables influencing the IGBT temperature. However, since the IGBT is most sensitive to temperature changes, a reactive way of controlling the temperature is limited in its effectiveness. Predicting both drive operation and IGBT temperature is required.

The problem of significant temperature changes in IGBTs during the operation is relevant in many applications where a drive circuit powers a motor that experiences a varying external force or torque, or a varying power from a generator is converted. Examples include compressors, cranes, elevators, shovels, wind turbines, test benches, and sugar centrifuges.

### OBJECTIVE OF THE INVENTION

It is an objective of the invention to improve the operation of an IGBT, and in particular to extend the lifetime of the IGBT by reducing temperature changes during operation of the IGBT.

This objective is achieved by a first method for operating an IGBT according to a first independent claim, by a second method for training a machine learning model for use in the first method according to a second independent claim, a computer program, a non-transitory machine-readable storage medium and/or a download product, one or more computers and/or compute instances. Further advantageous embodiments are detailed in the respective dependent claims.

### DISCLOSURE OF THE INVENTION

The first aspect of the invention provides a computer-implemented method for operating an insulated-gate bipolar transistor, IGBT.

At a step of the method, a prediction of a change of the IGBT temperature over a given temporal prediction horizon is determined, by at least one machine learning model, based at least in part on the current operating state and/or on current operational parameters, of the IGBT.

The safe operating area of an IGBT comprises three main operating states. The safe operating area describes the capability of the IGBT to withstand significant levels of voltage and current at the same time. The first operating state is the operation of a short circuit. In that state, the current in the IGBT is limited by its gate voltage and transconductance and can reach values over ten times its continuous rating. The short circuit capability is achieved by limiting the transconductance and hole current density. For this reason, the short-circuit rated IGBTs have higher voltage drop than the equivalent parts with no short-circuit rating.

The second operational state is an inductive turn-off. In an inductive turn-off, the voltage swings from a few volts to the supply voltage with constant current and with no channel current (gate voltage is gone to zero). This condition is different from operation in the short circuit because the load current consists of holes flowing through the gate resistance. Finally, the IGBT operates as a linear amplifier in the third operation state. The linear operation comprises the combination of the two modes described above.

Current and voltage characteristics of the IGBT in each operational state depend on temperature since physical characteristics of the IGBT, such as resistance and capacitance, depend on the temperature.

The temperature of the IGBT may depend on several operational parameters, such as the switching frequency, fan speed, and cooling liquid supply.

During the IGBT operation in switched DC applications, repetitive (such as during PWM mode) or slow switching processes may occur. Those switching processes may lead to power losses of IGBTs. The power losses, in their turn, may affect the temperature change of IGBTs.

The power losses can be divided into steady-state losses, i.e., during the operational state, and dynamic losses during switching on and off processes.

The steady-state losses generally result from component-specific and load-specific parameters, such as the on-resistance and the load current.

IGBTs have a finite switching time. Therefore, switching losses from the dynamic voltages and currents cannot be avoided. They must be handled by IGBTs the time it takes to turn on or off.

The dynamic losses, at least in the linear regime, are proportional to the switching frequency of the IGBT.

In its turn, the temperature change of the IGBT during the switching operation depends on the duration of the operation, power losses, and thermal impedance of the IGBT, which can be found on the characteristics sheet, for example, and the switching frequency.

The higher the switching frequency, the higher the thermal losses, corresponding to the dynamic switching process. Therefore, the temperature change during the operation process of the IGBT is the more significant contribution.

For the slow and fast switch-on process, a distinction should be drawn between how quickly the device is turned off again after the switch-on.

The at least one machine learning model predicts the change in the IGBT temperature based on the operational state and operational parameters. In the case when the operating values of the IGBT corresponding to the current operating state get close to exceeding the safe operational area of a given IGBT, they are adjusted. Therefore, the machine learning model allows predicting that the IGBT operates inside the safe operating area or exceeds the safe operating area for a short time only.

At another step of the method, a modification of the operating parameters of the IGBT and/or of a cooling system that acts on the IGBT that is likely to reduce the absolute value of the predicted change of the IGBT temperature is determined based on the prediction of a change of the IGBT temperature. It may be relevant for the thermal impedance operating parameter, which depends on temperature and contributes to defining voltage and current characteristics of IGBTs.

At another step of the method, the modification of the operating parameters of the IGBT and/or of a cooling system that acts on the IGBT that is likely to reduce the absolute value of the predicted change of the IGBT temperature is applied to the operation of the IGBT, and/or of the cooling system.

On top of avoiding that the temperature of the IGBT ventures out of the safe area, the method also reduces changes to the temperature of the IGBT within the safe area. Even variations of the IGBT temperature within the safe area contribute to the wear of the IGBT and thus make a debit from the service life of the IGBT. The better the temperature of the IGBT can be kept constant, the longer its service life will be. The basic idea of the method is that by predicting the temperature change using the machine learning model, the concrete value of this temperature change is available early enough, so that applying the modification to the operation of the IGBT, and/or of the cooling system, comes in good time to reduce or even avoid the predicted temperature change. By contrast, while merely reacting to a temperature change that has already happened might serve to move the temperature into a safer range, this moving constitutes a further temperature change in the opposite direction and thus makes another debit from the service life of the IGBT.

The computed modification of operating parameters may be provided to any sort of control system that governs the operation of the IGBT and/or of the cooling system, such as an on-board computer in case of an electric vehicle. But applying the modification to the operation of the IGBT, and/or of the cooling system, may also comprise notifying this modification to a human operator of a technical system, such as a crane operating at a construction site, or an industrial plant.

According to one embodiment, the method can further comprise the following steps.

At one further step of the method, a threshold value of IGBT temperature variation over the prediction horizon is defined.

Advantageously, predicting a threshold value of IGBT variation corresponding to a given operating state and parameters may guarantee that the IGBT is operating in a safe operating area during the operation. The duration of the operation may be selected as the prediction horizon.

At one step of the method, a first drive state characterized by high switching frequency and high temperature is defined. It is called a normal drive state. At one step of the method, a second drive state characterized by low switching frequency and low temperature is defined. It is called a strong cooling state. At one step of the method, a third state characterized by adjusted temperature and adjusted switching frequency is defined. It is called an adjusted state. At one step of the method, at least two values of IGBT temperature and a trend over the prediction horizon are provided, based on predictions of the IGBT operating parameters. At one step of the method, the IGBT is switched to the drive state with lower frequency and temperature, i.e. to the strong cooling state or the adjusted state, when the variation of the IGBT temperature over the prediction horizon is predicted to exceed the threshold.

At one step of the method, the IGBT is switched to the first drive state, i.e., to the normal state, when the variation of the IGBT temperature over the prediction horizon is predicted not to exceed the defined threshold value.

The basic idea is to introduce three states with respect to the cooling regime of a drive, like the existing temperature control. In the first state, the drive operates at a normal (high) switching frequency and uses a standard control for fan speed and colling liquid. In the second state (increased cooling), the method proactively attempts lower the IGBT temperature. The drive might operate at a reduced switching frequency (which results in lower IGBT temperatures), increased fan speed and increased cooling liquid supply. In the third state, the method attempt to increase the IGBT temperature. Therefore, the drive might operate at a higher switching frequency, lower fan speed, and reduced cooling liquid flow.

If the IGBT temperature change exceeding the threshold value (i.e. peak or dip) is predicted, the drive switches in the state without an excess threshold value. The drive switches back to the normal cooling regime if it is predicted that the IGBT will not experience temperature changes exceeding the threshold value. The normal cooling regime may refer to fixed values (switching frequency, fan speed, cooling liquid supply) and temperature control (with or without dynamically adjusting the switching frequency, e.g., minimizing the drivetrain losses).

One or several machine learning models may be trained to predict future operations, environmental conditions and IGBT temperature, for example, from historical data. After training, one or several machine learning models may be used to predict several future temperature values. The predicted sequence of temperature values will allow calculating the maximum temperature change over the prediction horizon. The switching frequency will be adjusted to achieve a lower temperature change if the temperature difference is too significant (based on a predefined threshold). The temperature control can be gradually reset to normal mode if the temperature is stabilized at some value which does not exceed the threshold.

According to one embodiment, the adjusted state of the IGBT is determined based at least in part on a prediction of the operating state, the operating parameters, and/or the temperature obtained from the at least one machine learning model.

According to a further embodiment, the at least one machine learning model comprises one or more of models: linear regression, gaussian regression, multivariant regression, Random Forest Regression, Long short-term memory, LSTM Artificial Neural Network, and 1-D Convolutional network.

According to a further embodiment, the prediction of the IGBT temperature is obtained from a daisy chain of at least two machine learning models. The output of the first of at least two machine learning models is used as an input of the second of the at least two machine learning models. Both machine learning models together may have a lesser overall complexity than one single monolithic machine learning model that is trained to perform the same task.

A machine learning pipeline may be implemented to predict future changes in the IGBT temperature. The machine learning pipeline might consist of a single or several interacting machine learning models.

The switching frequency of the IGBT is adjusted proactively based on the prediction and an evaluation of the predicted temperature gradient.

Advantageously coupling the same machine learning model or several machine learning models in a pipeline may help achieve the required prediction with higher accuracy.

Different machine learning methods can be implemented for this purpose.

A rule-based machine learning method, for example, may comprise rules for training, such as: lowering the switching frequency to a specific value and increasing fan speed to another particular value.

Alternatively, a machine learning method based on optimization may be used. The model is trained iteratively in the optimization process, which results in a maximum and minimum function evaluation.

The training parameters are changed, and training results are compared after each iteration until the optimum results are reached. This process may allow one to increase the model's accuracy, decreasing the error rate. Different algorithms may be used to optimize the model, e.g. gradient descent and stochastic gradient descent algorithms.

In one particularly advantageous embodiment, an optimization algorithm may be used to find the optimal switching frequency or sequence of switching frequencies that avoids the temperature peaks in the best possible way.

In another advantageous embodiment, the decision to adjust the switching frequency may happen differently. One may use a fixed number of settings, at least two of them, for example, combination switching frequencies, fan speed, and cooling liquid supply, to define a new drive state of the IGBT. For example, the IGBT drive state change may be realized from a strong cooling setting to the next low cooling setting. The drive state change may also be performed gradually so that the operation settings are not drastically changed at once. Vice versa, the machine learning model may be used to check if a temperature peak will be present if the drive goes back to the normal cooling setting.

The implementation of the IGBT temperature prediction may happen in many different ways.

In one example, one may tackle the prediction problem with a single machine learning model. In that case, the machine learning problem is a multivariate regression problem (on the input side) that produces multiple timesteps ahead as an output. Long short-term memory, LSTM, Neural networks are one possible model classes to address this problem. Since this alternative has only one model, there is only one artefact to maintain, and the model can probably achieve the highest accuracy.

In another particularly advantageous embodiment, one may tackle the temperature prediction problem with several machine learning models. For example, one model may produce a 1:1 prediction of future operation point sequences. An operation point may be considered a combination of torque/power and speed of an electric motor, for example. The second model may produce a prediction of future environmental temperature sequences. For example, different environmental temperature predictions may occur if considered installation, e.g. a crane comprising the IGBT is operated inside a factory or operated at the construction site outdoor.

The third model may be an N:1 multistep regression model for the final prediction of the IGBT temperature. An advantage of using several machine learning configurations is that IGBT temperature prediction may be learned across drives of the same type comprising the same type of IGBTs. In contrast, the operation points and environmental temperature are different between different drives. Hence, this model allows for more learning across various installations. Also, some trained models may be re-used in different installations without requiring a new or further training.

One particularly advantageous embodiment describes a pipeline composition from several single-step models where the output of each model is used as input for the next prediction.

Another alternative is to use a multivariate regression with multiple outputs (IGBT temperature, operation points, environmental temperature) and use the outputs as input for additional prediction.

A sequence of operation points, e.g. combination of torque/power and speed, switching frequency, IGBT temperature and environmental measurements may be used as input into the model, which outputs a sequence of future IGBT temperatures. The characteristics of the predicted IGBT temperature trend may be used to decide whether the switching frequency is adjusted or not.

The predicted sequence of the IGBT temperature can be used to quantify the temperature change, e.g. by calculating the difference between the minimal and maximal temperature. The difference can be calculated for instance between two direct neighbors or a point and the second next point, etc.

According to a further embodiment, the modification of the operating parameters of the IGBT, and/or of the cooling system is determined by a model predictive control, MPC. A model of the MPC method comprises the at least one machine learning model.

In a different implementation, the temperature control may be based on a MPC regime, which uses a machine learning model as the model. In that case, there is no differentiation between different states w.r.t. to temperature control. The MPC objective is to minimize temperature changes over a prediction horizon while considering the IGBT temperature, e.g. min/max over the prediction horizon, as a soft constraint.

Since a broad range of Automotive IGBT is designed for high voltage switching applications, such as plug-in hybrid vehicles and electric cars, the optimization might also consider other objectives, e.g., minimizing **drivetrain losses** of an electric motor. In this case, avoiding the IGBT temperature peaks could be a constraint of the drivetrain loss minimization problem.

According to a further embodiment, the determining of the modification of the operating parameters of the IGBT and/or of the cooling system is performed under the constraint of a given IGBT threshold temperature value. In this manner, the exceeding of the safe area of the IGBT temperature may be avoided. Even a momentary excursion outside the safe area may damage or destroy the IGBT.

According to a further embodiment, the operating parameters of the IGBT comprise at least one measurement value that characterizes an environmental condition of the environment in which the IGBT is operated. For example, one and the same piece of equipment, such as a crane, may need to be operated differently depending on whether it is being operated in hot weather or in cold weather.

According to a further embodiment, the at least one measurement value comprises one or more of: an ambient air temperature, a temperature inside a housing in which the IGBT is operated, and a supply temperature of cooling water that is provided to the IGBT.

According to a further embodiment, the IGBT is chosen to be part of a drive for at least one electric motor.

According to a further embodiment, the operating parameters of the IGBT comprise one or more of a rotating speed, a power demand, and a torque demand of the electric motor.

The invention also provides a method for training at least one machine learning model for use in the prediction method discussed above.

At one step of the method, the history of operating states and/or operating parameters obtained during operation of at least one IGBT is provided as input data. At one step of the method, the temperature of the IGBT and/or a change thereof is predicted using the machine learning model based on the input data.

At one step of the method, a deviation of this prediction from the ground truth data is rated by means of a predetermined loss function. At one step of the method, parameters that characterize the behaviour of the machine learning model are optimized towards the goal that the rating by the loss function is likely to improve.

If the temperature of the IGBT and/or a change thereof (e.g. gradient) are written as vectors, the loss function may, for example, comprise an Euclidean distance between these vectors. This corresponds to the 2-norm of the difference vector between these vectors.

This training is a supervised training because the candidate temperature of the IGBT and/or a change thereof is compared to something that is deemed to be "ground truth". This "ground truth" is provided by the historical data. No manual labelling of training data, as it is customary for most supervised training methods, is required.

In particular, directly comparing the candidate temperature of the IGBT and/or a change thereof to the historical data is fast. The comparison will be performed many times during the training, so any economy here is magnified many times over

The training of the machine learning models and the prediction of IGBT temperatures, and the optimization do not need to take place in the same location. The training of the machine learning models may happen in the cloud (with flexibly available compute resources) while the prediction and the decision making happen directly on the drive. Trained and updated models may be downloaded to the drive from the cloud either automatically and directly an internet connection or manually by a service technician. Similarly, training data may need to be sent to the cloud (automatically or manually).

The methods may be computer-implemented embodied in software. The invention, therefore also provides a computer program with machine-readable instructions that, when executed on one or more computers, cause the one or more computers to perform one of the methods discussed above. Herein, embedded systems, microcontrollers and control devices (such as programmable logic controllers, PLC), and cloud computing instances that are able to execute machine-readable instructions are understood to be computers as well.

The invention also provides one or more non-transitory storage media and/or download products with the one or more computer programs. A download product is a product that may be sold in an online shop for immediate fulfilment by download. The invention also provides one or more computers with the one or more computer programs and/or with the one or more non-transitory machine-readable storage media and/or download products. The invention also provides one or more computers and/or compute instances with the computer program and/or with the machine-readable storage medium and/or download product.

In this entire description of the invention, the sequence of procedural steps is presented in such a way that the process is easily comprehensible. However, the skilled person will recognize that many of the process steps can also be executed in a different order and lead to the same or a corresponding result. In this sense, the sequence of the process steps can be changed accordingly. Some features are provided with counting words to improve readability or to make the assignment more clear, but this does not imply the presence of certain features.

### DESCRIPTION OF THE FIGURES

In the following, the invention is illustrated using Figures without any intention to limit the scope of the invention. The Figures show:
Figure 1: Exemplary embodiment of the method 100 for operating an insulated-gate bipolar transistor, IGBT;
Figure 2: Exemplary embodiment of the method 200 for training a machine learning model 20 for use in the method 100.

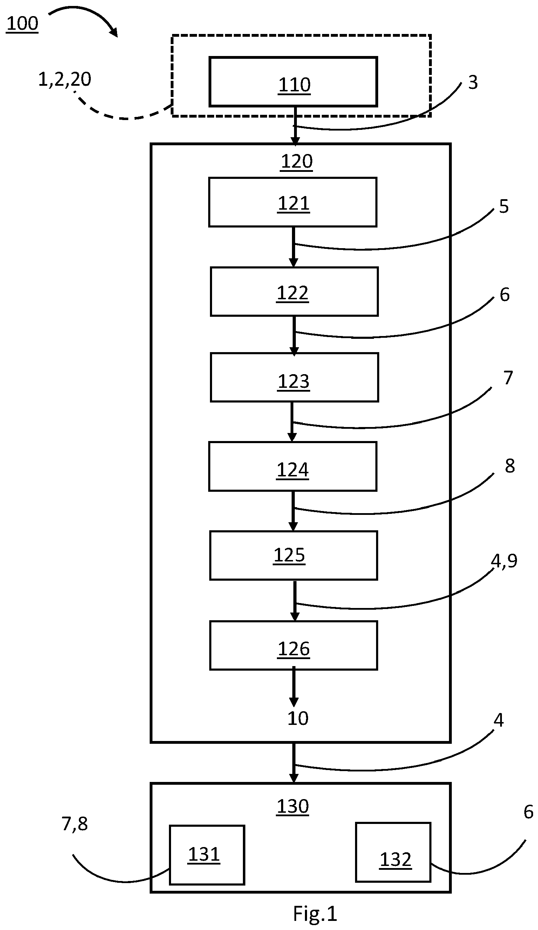

Figure 1 is a schematic flow chart of an embodiment of the method 100 for operating an insulated-gate bipolar transistor, IGBT.

In step 110, a prediction of a change of the IGBT temperature 3 over a given temporal prediction horizon is determined by at least one machine learning model 20, based at least in part on the current operating state 1, and/or on current operating parameters 2, of the IGBT.

In step 120, a modification 4 of the operating parameters of the IGBT, and/or of a cooling system that acts on the IGBT, that is likely to reduce the absolute value of the predicted change of the IGBT temperature, is determined, based on the prediction 3 on the one hand and the current operating state 1, and/or on the current operating parameters 2, on the other hand.

In step 130 the modification 4 of the operating parameters of the IGBT, and/or of a cooling system that acts on the IGBT, that is likely to reduce the absolute value of the predicted change of the IGBT temperature 3 is applied to the operation of the IGBT, and/or for the cooling system.

In step 121 a threshold value of IGBT temperature variation 5 over the prediction horizon is defined.

In step 122 a first drive state (normal state) 6 characterized by high switching frequency and high temperature is defined.

In step 123 a second drive state (strong cooling state) 7 characterized by low switching frequency and low temperature is defined.

In step 124 a third state (adjusted state) 8 characterized by adjusted temperature and adjusted switching frequency is defined.

In step 125 at least two values 9 of IGBT temperature and a trend over the prediction horizon are provided, based on predictions 4 of the IGBT operating parameters.

In step 126 the variation 10 of the IGBT temperature over the prediction horizon 10 is calculated.

In step 131 the drive of the IGBT is switched to the drive state with lower frequency and temperature (strong cooling state 7 or adjusted state 8), when the variation of the IGBT temperature over the prediction horizon 5 is predicted to exceed the threshold.

In step 132 the drive of the IGBT is switched to the first drive state (normal state 6), when the variation of the IGBT temperature over the prediction horizon 5 is predicted not to exceed the defined threshold value.

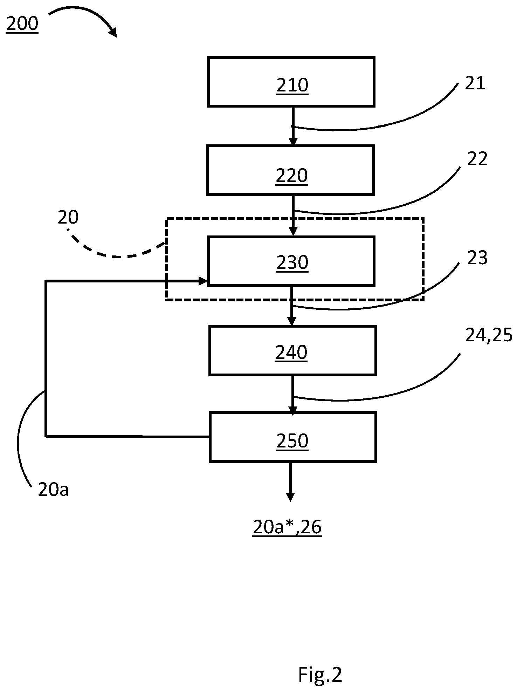

Figure 2 is a schematic flow chart of an embodiment of the method 200 for training at least one machine learning model 20 for use in the method 100.

In step 210, a history of operating states and/or operating parameters obtained during the operation of at least one IGBT is provided as input data 21.

In step 220, a history of the temperature of the at least one IGBT as ground truth data 22 is provided.

In step 230, the temperature of the IGBT and/or a change thereof is predicted 23, using the machine learning model 20, based on the input data 21.

In step 240, a deviation 24 of the prediction 23 is rated by means of a predetermined loss function 25.

In step 250, parameters 20a that characterize the behaviour of the machine learning model 20 are optimized towards the goal 26 that the rating by the loss function 25 is likely to improve. The finally optimized state of the parameters 20a is labelled with the reference sign 20a*.

### List of reference signs:

- 1: current operating state of IGBT
- 2: current operating parameters of IGBT
- 3: prediction of change of IGBT temperature
- 4: modification of operating parameters of IGBT
- 5: temperature variation over prediction horizon
- 6: first drive state
- 7: second drive state
- 8: third state
- 9: values of IGBT temperature
- 10: variation of IGBT temperature
- 20: machine learning model
- 20a: parameters, characterize behavior of model 20
- 20a*: finally optimized state of parameters 20a
- 21: history of operating states/operating parameters
- 22: history of IGBT temperature
- 23: prediction of temperature/change
- 24: deviation of prediction 23 from ground truth data 22
- 25: loss function
- 26: goal of optimization
- 100: method for operating IGBT
- 110: determining prediction of change of IGBT temperature
- 120: determining modification 4 of operating parameters
- 121: defining threshold value of IGBT temperature variation
- 122: defining first drive state 6
- 123: defining second drive state 7
- 124: defining third state 8
- 125: providing IGBT temperature values 9 over prediction horizon
- 126: calculating variation 10 over prediction horizon
- 130: applying modification 4
- 131: switching to strong cooling state or adjusted state
- 132: switching to normal state
- 200: method for training machine learning model 20
- 210: providing history of operating states/parameters
- 220: providing history of temperature
- 230: predicting temperature of IGBT
- 240: rating deviation 24 of prediction 23 from ground truth data 22
- 250: optimizing parameters 20a of model 20

## Claims

1. A computer-implemented method (100) for operating an insulated-gate bipolar transistor, IGBT, comprising the steps of:
• determining (110), by at least one machine learning model (20), based at least in part on the current operating state (1), and/or on current operating parameters (2), of the IGBT, a prediction of a change of the IGBT temperature (3) over a given temporal prediction horizon;
• determining (120), based on this prediction (3) on the one hand and the current operating state (1), and/or on the current operating parameters (2), on the other hand, a modification (4) of the operating parameters of the IGBT, and/or of a cooling system that acts on the IGBT, that is likely to reduce the absolute value of the predicted change of the IGBT temperature; and
• applying (130) this modification (4) to the operation of the IGBT, and/or of the cooling system.

2. The computer-implemented method (100) of claim 1, further comprising the steps of:
• defining (121) a threshold value of IGBT temperature variation (5) over the prediction horizon;
• defining (122) a first drive state (6) **characterized by** high switching frequency and high temperature (normal state);
• defining (123) a second drive state (7) **characterized by** low switching frequency and low temperature (strong cooling state);
• defining (124) a third state (8) **characterized by** adjusted temperature and adjusted switching frequency (adjusted state);
• based on predictions of the IGBT operating parameters (4), provide (125) at least two values (9) of IGBT temperature and a trend over the prediction horizon;
• calculate (126) the variation (10) of the IGBT temperature over the prediction horizon;
• switch (131) to the drive state with lower frequency and temperature (strong cooling state or adjusted state), when the variation of the IGBT temperature (10) over the prediction horizon is predicted to exceed the threshold (5);
• switch (132) to the first drive state (normal state) (6), when the variation of the IGBT temperature (10) over the prediction horizon is predicted to not exceed the defined threshold value (5);

3. The computer-implemented method (100) of claim 2, wherein the adjusted state is determined based at least in part on a prediction (4) of the operating state, the operating parameters, and/or the temperature, of the IGBT obtained from the at least one machine learning model (20).

4. The computer-implemented method (100) of any one of claims 2 to 3, wherein at least one parameter that characterizes the adjusted state (8) is optimized by an optimization algorithm towards the goal of reducing the absolute value of the predicted change of the IGBT temperature (5).

5. The computer-implemented method (100) of any one of claims 1 to 4, wherein the at least one machine learning model (20) comprises one or more of: linear regression, gaussian regression, multivariant regression, Random Forest Regression, LSTM Artificial Neural Network, and 1-D Convolutional network.

6. The computer-implemented method (100) of any one of claims 1 to 5, wherein the prediction of the IGBT temperature is obtained from a daisy-chain of at least two machine learning models, wherein the output of the first of the at least two models is used as an input of the second of the at least two models.

7. The computer-implemented method (100) of any one of claims 1 to 6, wherein the modification of the operating parameters of the IGBT, and/or of the cooling system (4), is determined by a model predictive control, MPC, method whose model comprises the at least one machine learning model.

8. The computer-implemented method (100) of any one of claims 1 to 7, wherein the determining of the modification of the operating parameters of the IGBT, and/or of the cooling system (4), is performed under the constraint of a given IGBT threshold temperature value.

9. The computer-implemented method (100) of any one of claims 1 to 8, wherein the operating parameters of the IGBT comprise at least one measurement value that characterizes an environmental condition of the environment in which the IGBT is operated.

10. The computer-implemented method (100) of claim 9, wherein the at least one measurement value comprises one or more of: an ambient air temperature, a temperature inside a housing in which the IGBT is operated, and a supply temperature of cooling water that is provided to the IGBT.

11. The computer-implemented method (100) of any one of claims 1 to 10, wherein the IGBT is chosen to be part of a drive for at least one electric motor.

12. The computer-implemented method (100) of claim 11, wherein the operating parameters of the IGBT comprise one or more of: a rotating speed, a power demand, and a torque demand, of the electric motor.

13. A computer-implemented method (200) for training at least one machine learning model (20) for use in the method (100) of any one of claims 1 to 12, comprising the steps of:
• providing (210) a history of operating states, and/or operating parameters, obtained during operation of at least one IGBT, as input data (21);
• providing (220) a history of the temperature of the at least one IGBT as ground truth data (22);
• predicting (230), using the machine learning model (20), based on the input data (21), the temperature of the IGBT, and/or a change thereof (23);
• rating (240) a deviation (24) of this prediction (23) from the ground truth data (22) by means of a predetermined loss function (25); and
• optimizing (250) parameters (20a) that characterize the behaviour of the machine learning model (20) towards the goal (26) that the rating by the loss function is likely to improve.

14. A computer program, comprising machine-readable instructions that, when executed on one or more computers and/or compute instances, cause the one or more computers and/or compute instances to perform a method (100, 200) of any one of claims 1 to 13.

15. A non-transitory machine-readable storage medium and/or a download product with the computer program of claim 14, and/or with a machine-learning model trained with the method of claim 13.

16. One or more computers and/or compute instances with the computer program of claim 14, and/or with the machine-readable storage medium and/or download product of claim 15.
